# EUROPÄISCHE PATENTANMELDUNG

(11) **EP 1 749 721 A1**
(43) Veröffentlichungstag der Anmeldung: **07.02.2007**
(21) Anmeldenummer: 06115344.1
(22) Anmeldetag: 13.06.2006
(51) Int. Cl.: B60T 8/48

(54) **Verfahren und Vorrichtung zur Ansteuerung einer Bremsanlage**

(30) Priorität: 01.08.2005 DE 102005036051
(71) Anmelder: ROBERT BOSCH GMBH, 70442 Stuttgart (DE)
(72) Erfinder: Bauer, Heike, 70376, Stuttgart (DE); Galbas, Roland, 70469, Stuttgart (DE)

(57) **Zusammenfassung**

Typische Bremsanlage mit hydraulischen und/oder pneumatischen Komponenten weisen wenigstens einen Hauptbremszylinder, eine Pumpe, eine Speicherkammer und ein zwischen dem Hauptbremszylinder und der Pumpe angeordnetem Hochdruckschaltventil auf. Mit der vorliegenden Erfindung wird ausgehend von einer derartigen Erfindung ein Verfahren bzw. eine Vorrichtung beschrieben, bei der das Hochdruckschaltventil in Abhängigkeit vom Füllgrad der Speicherkammer geschlossen wird. Durch eine derartige Abhängigkeit kann ein unnötiges Öffnen und Schließen des Umschaltventils beispielsweise aufgrund eines ungünstig vorliegenden Druckarbeitspunktes vermieden werden, so dass eine geringere Beanspruchung des Hochdruckschaltventils und eine Reduzierung der Geräuschentwicklung durch die Umschaltgeräusche erreicht werden kann.

## Beschreibung

Die Erfindung betrifft ein Verfahren und eine Vorrichtung zur Steuerung einer Bremsanlage in einem Fahrzeug nach den Oberbegriffen der unabhängigen Ansprüche.

### Stand der Technik

Bei hydraulischen Bremsanlagen, wie beispielsweise in der DE 103 27 567 A1 beschrieben, wird der Bremsdruck in der Radbremsen üblicherweise mittels der vom Fahrer erzeugten Bremskraft im Hauptbremszylinder oder mittels eines von einer Pumpe erzeugten und über ein Einlassventil an der Radbremse geregelten Bremsdrucks aufgebaut. Um den Bremsdruck an der Radbremse nach erfolgtem Bremsvorgang, beispielsweise im Rahmen eines ESP- oder ABS-Vorgangs, zügig abbauen zu können, kann die Pumpe ebenfalls dazu verwendet werden, die Bremsflüssigkeit aus der Radbremse bzw. von einer der Radbremse zugeordneten Speicherkammer abzusaugen. Bei diesem Absaugvorgang ist jedoch darauf zu achten, dass die Verbindung vom Hauptbremszylinder zur Pumpenansaugseite geschlossen ist, um ein Ansaugen der Bremsflüssigkeit aus dem Hauptbremszylinder zu verhindern. Zu diesem Zweck ist ein Ansaugventil bzw. ein Hochdruckschaltventil (HSV) zwischen Hauptbremszylinder und Pumpe vorgesehen, welches üblicherweise generell geschlossen bleibt, solange kein Bremsdruckaufbau gewünscht wird. Bei Änderungen des Bremsdrucks in der angesteuerten Radbremse, d.h. bei Änderungen zwischen Druckabbauphasen, Druckhaltephasen und Druckaufbauphasen erfolgt ein Schließen und Öffnen des Hochdruckschaltventils, welches bei kurz hintereinander folgenden Schaltphasen zu einer störenden Geräuschentwicklung im Fahrgastraum führen kann. Ebenso kann ein Ventil-Toggeln, d.h. ein schnelles Hin- und Herschalten des Ventils auftreten, wenn der (Druck-)Arbeitspunkt zur Steuerung des HSV ungünstig gewählt wird.

Die Aufgabe der Erfindung besteht nun darin, die Schaltvorgänge des Hochdruckschaltventils zu reduzieren.

### Vorteile der Erfindung

Typische Bremsanlagen mit hydraulischen und/oder pneumatischen Komponenten weisen wenigstens einen Hauptbremszylinder, eine Pumpe, eine Speicherkammer und ein zwischen dem Hauptbremszylinder und der Pumpe angeordnetes Hochdruckschaltventil auf. Mit der vorliegenden Erfindung wird ausgehend von einer derartigen Bremsanlage ein Verfahren bzw. eine Vorrichtung beschrieben, bei der das Hochdruckschaltventil in Abhängigkeit vom Füllgrad der Speicherkammer geschlossen wird. Durch eine derartige Abhängigkeit kann ein unnötiges Öffnen und Schließen des Hochdruckschaltventils beispielsweise aufgrund eines ungünstig vorliegenden Druckarbeitspunktes vermieden werden, so dass eine geringere Beanspruchung des Hochdruckschaltventils und eine Reduzierung der Geräuschentwicklung durch die Umschaltvorgänge erreicht werden kann.

In einer Ausgestaltung der Erfindung ist vorgesehen, dass das Hochdruckschaltventil in Abhängigkeit von einem Überschreiten bzw. einem Unterschreiten eines ersten Schwellenwertes angesteuert und somit geschlossen bzw. geöffnet werden kann. Alternativ bzw. optional kann das Schließen des Hochdruckschaltventils auch durch das Ansteuern der Pumpe initiiert werden. Vorteilhaft ist dabei, dass die Pumpe gegebenenfalls nur bei einem hohen Füllgrad des Speichers in Betrieb genommen wird und so eine unnötige Ansteuerung des Hochdruckschaltventils verhindert wird.

Weiterhin ist vorgesehen, dass die Bremsanlage wenigstens eine hydraulisch und/oder pneumatisch gesteuerte Radbremse aufweist. Wird an dieser Radbremse ein Druckaufbau bzw. ein Druckabbau initiiert, so kann in Verbindung mit dem Füllgrad des Speichers erkannt werden, ob der Speicher ausreichend Reserven zur Aufnahme des Bremsmediums aufweist. Reicht diese Reserve im Speicher nicht aus bzw. ist für abzusehende künftige Bremsvorgänge nicht ausreichend Reserve vorhanden, so ist mit einer Inbetriebnahme der Pumpe zu rechnen.

Um ein Absaugen des Bremsmediums aus dem Hauptbremszylinder zu verhindern, kann in diesem Fall vorteilhafterweise das Hochdruckschaltventil geschlossen werden.

Eine weitere Alternative der Erfindung besteht darin, dass eine Differenz aus dem potentiellen Gesamtspeichervolumen und der Summe des tatsächlich im Speicher befindlichen Volumens des Bremsmediums und der im Bremskreis an einer dem Speicher zugeordneten wenigstens einen Radbremse anliegenden Volumen des Bremsmediums gebildet wird. Dadurch lässt sich vorteilhafterweise die Reserve berechnen, die für einen Abbau des Bremsmediums in der Radbremse im Speicher zur Verfügung steht. Liegt diese Differenz unter einem Differenzschwellenwert, so ist mit der Ansteuerung der Pumpe zu rechnen. Als Resultat ist somit ein Schließen des Hochdruckschaltventils vorzusehen.

Vorteilhafterweise wird nach der Schließung des Hochdruckschaltventils die Speicherkammer, die wenigstens einer Radbremse der Bremsanlage zugeordnet ist, bis zur Erreichung eines zweiten Schwellenwertes des Füllgrades entleert. Typischerweise wird in einer hydraulischen Bremsanlage als Speicherkammer ein Hydrospeicher verwendet.

Durch die Erfindung ist es möglich, die Pumpe für zwei völlig unterschiedliche Nutzfälle zu betreiben. Darunter fällt zum Einen der aktive Druckaufbau sowie die Entleerung der Speicherkammer. Die Erfindung ermöglicht die parallele Nutzung der Pumpe sowie einen robusten Einsatz.

Weitere Vorteile ergeben sich aus der nachfolgenden Beschreibung von Ausführungsbeispielen bzw. aus den abhängigen Patentansprüchen.

### Zeichnungen

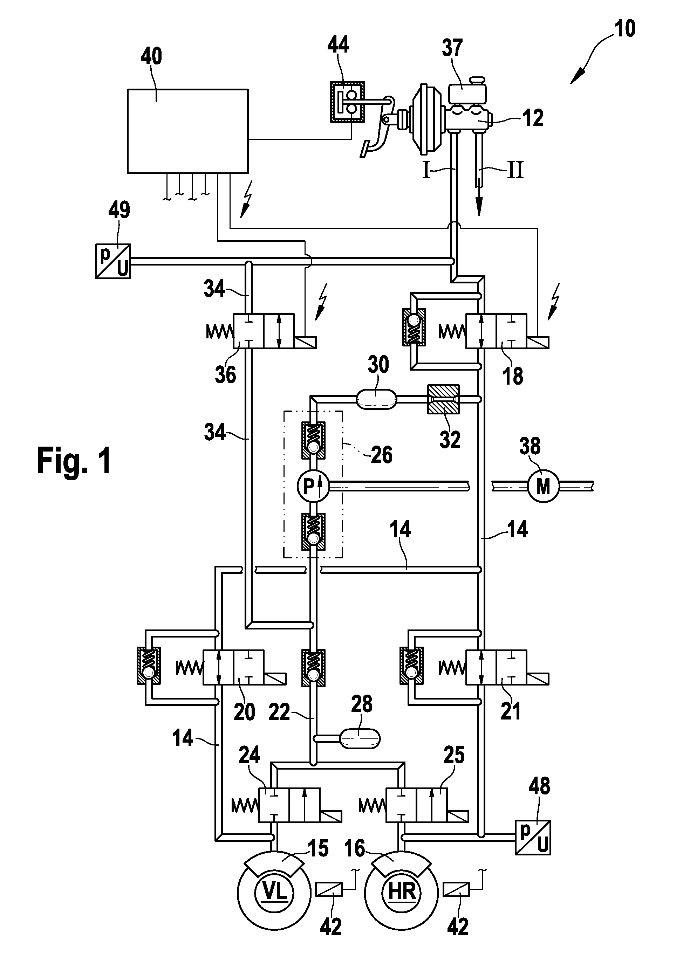

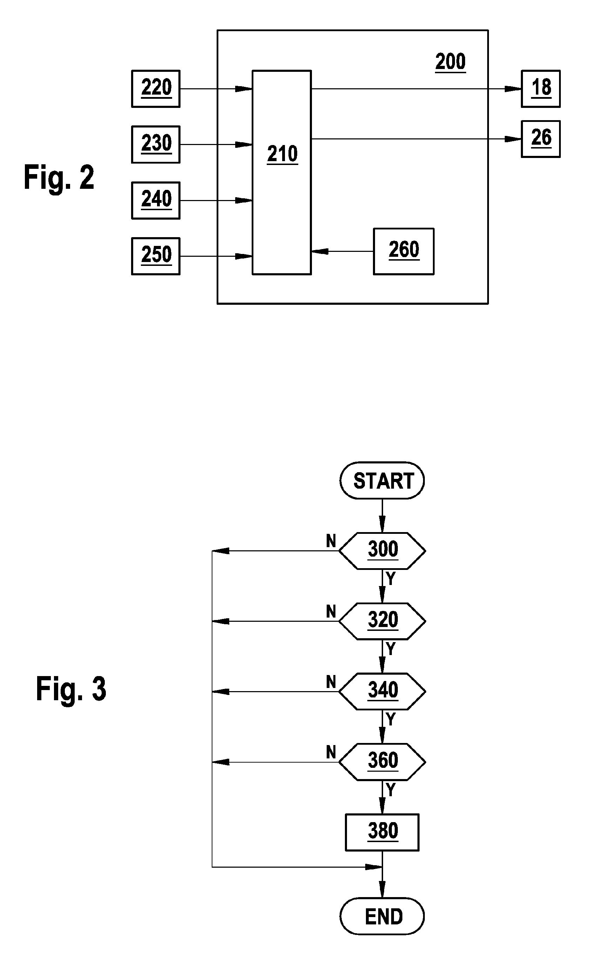

Figur 1 zeigt schematisch den Aufbau einer Bremsanlage. Das Blockschaltbild in Figur 2 stellt die Steuerung gemäß dem Ausführungsbeispiel dar. In Figur 3 ist ein Flussdiagramm des Algorithmus dargestellt, welches im Steuergerät nach Figur 2 abläuft.

### Ausführungsbeispiel

Die Figur 1 zeigt schematisch eine hydraulische Fahrzeugsbremsanlage 10 mit einem Zweikreis-Hauptbremszylinder 12, an den zwei voneinander unabhängige Bremskreise I und II angeschlossen sind. Zur Vereinfachung ist in der Zeichnung 1 jedoch nur der Bremskreis I dargestellt, wobei der andere Bremskreis II entsprechend realisiert wird.

Eine sich verzweigende Hauptbremsleitung 14 führt vom Hauptbremszylinder 12 zu zwei an den Bremskreis I angeschlossenen Radbremsen 15 und 16. Im vorliegenden Ausführungsbeispiel sind die beiden Radbremsen 15 und 16 einem Vorderrad und einem diagonal gegenüberliegenden Hinterrad des dazu gehörigen Fahrzeugs zugeordnet, wobei der Bremskreis II den beiden anderen Rädern zugeordnet sind. Neben dieser sog. X-Bremskreisaufteilung ist jedoch auch jede andere Aufteilung der Bremskreise denkbar.

In einem gemeinsamen Teil der Hauptbremsleitung 14 ist zwischen dem Hauptbremszylinder 12 und der Pumpe 26 ein Umschaltventil 18 angeordnet. Des weiteren sind in den verzweigten Teilen der Hauptbremsleitung 14 zwei in ihrer Grundstellung offene Einlassventile 20 und 21 angeordnet, die je einer der Radbremsen 15 und 16 vorgeschaltet sind. Von den Radbremsen 15 und 16 führt eine sich vereinigende Rückleitung 22, in der für jede der beiden Radbremsen 15 und 16 ein in seiner Grundstellung geschlossenes Auslassventil 24 bzw. 25 vorgesehen ist, zur Saugseite einer Hydropumpe 26, die auch als Rückförderpumpe bezeichnet werden kann. Zusätzlich ist an die Rückleitung 22 ein Hydrospeicher 28 angeschlossen, der bei ausgeschalteter Pumpe 26 und offenen Auslassventilen 24 bzw. 25 Bremsflüssigkeit aus den Radbremsen 15 bzw. 16 aufnehmen kann, für den Fall, dass Bremsdruck abgebaut werden soll. Optional ist eine Druckseite der Hydropumpe 26 über eine Dämpferkammer 30 und eine Drossel 32 zwischen dem Umschaltventil 18 und den Einlassventilen 20 und 21 an die Hauptbremsleitung 14 angeschlossen. Über eine Ansaugleitung 34, in der ein in seiner Grundstellung geschlossenes Ansaugventil 36 angeordnet ist, ist die Saugseite der Hydropumpe 26 an einen Hauptbremszylinder 12 angeschlossen. Mit Hilfe eines entsprechenden Sensors 49 kann der Druck im Hauptbremszylinder 12 erfasst werden, der durch die Betätigung des Bremspedals dem Bremswunsch des Fahrer entspricht.

Die Hydropumpen 26 des dargestellten und des nicht dargestellten Bremskreises I bzw. II sind mit einem gemeinsamen, elektrischen Pumpenmotor 38 antreibbar. Das Umschaltventil 18, die Einlassventile 20 und 21, die Auslassventile 24 und 25 sowie das Hochdruckschaltventil 36 sind im vorliegenden Ausführungsbeispiel als Magnetventile vorgesehen, die u.a. zur Blockierschutz- und zur Antriebschlupfregelung mit einem elektronischen Steuergerät 40 steuerbar sind. Dieses Steuergerät 40 kann darüber hinaus auch die Steuerung des Pumpenmotors 38 übernehmen und erhält Signale von Raddrehsensoren 42 und gegebenenfalls wenigstens einem Raddrucksensor 48, wobei die Sensoren zum Feststellen einer Blockierneigung eines Fahrzeugrades beim Bremsen oder von Schlupf beim Anfahren ausgewertet werden können. Darüber hinaus erhält das Steuergerät 40 ein Signal eines Bremspedalsensors (Bremslichtschalter) 44, mit dem eine Betätigung des Hauptbremszylinders 12 feststellbar ist.

Mit der beschriebenen Fahrzeugsbremsanlage ist eine Betriebsbremsung in an sich bekannter Weise möglich. Auch eine Blockierschutz-, Antriebsschlupf- und/oder Fahrdynamikregelung (ABS, ASR, FDR) ist durch eine derartige Bremsanlage möglich. Zur Blockierschutzregelung werden beispielsweise die Radbremsdrücke in den Radbremsen 15 und 16 mittels des elektronischen Steuergeräts 40 radindividuell geregelte (moduliert), indem die Einlassventile 20 und 21 sowie die Auslassventile 24 und 25 getaktet angesteuert werden und die Hydropumpe 26 in Betrieb gesetzt wird. Das Hochdruckschaltventil bleibt solange geschlossen, wie keine Druckaufbauten gefordert werden, die den Druck im Hauptbremszylinder übersteigen bzw. keine Leckageminderung während des Druckhaltens, d.h. p_{Soll} > p_{Hz} gefordert werden. In diesem Fall kann die Pumpe bei vorliegendem Speicherkammervolumen dieses in den Bremskreis zurückführen. Für einen schnellen Druckaufbau bei einer Antriebsschlupf- und/oder Fahrdynamikregelung wird das Hochdruckschaltventil 36 geöffnet, so dass die Hydropumpe 26 Bremsflüssigkeit unmittelbar aus dem Bremsflüssigkeitsvorratsbehälter 37 ansaugen kann.

Bei einer Speicherkammerentleerung, wie sie beispielsweise bei Antiblockierschutzregelungen oder elektronischen Stabilitätsprogrammen (ESP) vorkommen können, wird der aufgebaute Bremsdruck der Bremsflüssigkeit in den Radbremsen 15 bzw. 16 beispielsweise durch ein Öffnen der Auslassventile 24 bzw. 25 abgebaut. Die unter Druck stehende Bremsflüssigkeit kann dabei in den Speicher 28 strömen. Ist der Speicher 28 jedoch bereits gefüllt oder übersteigt das Volumen der Bremsflüssigkeit aus den Radbremsen 15 und 16 das Fassungsvermögen des Speichers 28, ist ein Abbau des Bremsdrucks in den Speicher nicht oder nur eingeschränkt möglich.

Zur Abhilfe wird in einem derartigen Fall das im Speicher 28 angesammelte Bremsflüssigkeitsvolumen durch die Pumpe 26 abgesaugt, um ein Abbau des Bremsdrucks in den Radbremsen zu ermöglichen. Vorteilhafterweise werden beim Absaugen der Bremsflüssigkeit die Auslassventile 24 und 25 geschlossen, um einen Unterdruck in den Radbremsen 15 und 16 zu verhindern. Weiterhin wird das Hochdruckschaltventil 36 während des Pumpvorgangs geschlossen, damit ein Absaugen der Bremsflüssigkeit aus dem Hauptbremszylinder 12 zu unterbinden. Es versteht sich von selbst, dass auch das Ventil 18 bei einem derartigen Absaugvorgang geschlossen bleibt.

Im vorliegenden Ausführungsbeispiel ist vorgesehen, das Hochdruckschaltventil 36 während Druckaufbauphasen, Druckhaltephasen und Druckabbauphasen nur dann zu schließen, wenn tatsächlich auch eine Speicherkammerentleerung notwendig ist. Zur Abschätzung der Notwendigkeit wird dabei der Füllgrad der Speicherkammer 28 und gegebenenfalls auch das durch den Druckabbau in den Radbremsen 15 und 16 abgeführte Volumen der Bremsflüssigkeit berücksichtigt. Zu diesem Zweck wird in einem Steuergerät 200, welches in einem besonderen Ausführungsbeispiel auch identisch mit dem Steuergerät 40 sein kann, ein Programm zur Ansteuerung des Hochdruckschaltventils 36 durchgeführt. Zur Bestimmung der Ansteuerung des Hochdruckschaltventil 36 wird, wie in Figur 2 dargestellt, in einem Block 210 der Füllgrad der Speicherkammer 28 eingelesen, der mittels einer entsprechenden Einrichtung 220 direkt erfasst oder abgeschätzt werden kann. Zusätzlich werden in den Block 210 auch Informationen über die Ansteuerung der Pumpe eingelesen, beispielsweise über ein (separates) Steuergerät 230 der Pumpe. Darüber hinaus wird auch das vorgesehene Druckverhalten an den Radbremsen erfasst und weitergeleitet. Dies kann beispielsweise in einem Block 240 geschehen, der vorgesehene Raddruckabbauphasen, Raddruckhaltephasen oder Raddruckaufbauphasen erkennt und entsprechend an den Block 210 weiterleitet. Typischerweise sind die Blöcke 230 und 240 ebenfalls im Steuergerät 40 integriert und nicht durch separate Vorrichtungen realisiert, wobei auch eine (bauliche) Trennung dieser Vorrichtungen möglich ist. Schlussendlich wird mit einem geeigneten Mittel 250 auch das in den Radbremsen gespeicherte Raddruckvolumen erfasst oder geschätzt, um das Volumen an Bremsflüssigkeit zu bestimmen, welches bei einem Bremsdruckabbau in den Speicher 28 gelangen kann. Mittels der eingelesenen Daten kann der Block 210 bzw. das darin ablaufende Programm gegebenenfalls unter Zuhilfenahme von fahrzeugspezifischen und systemspezifischen Daten, die im Speicher 260 abgelegt sind, eine Ansteuerung des Hochdruckschaltventils 36 vornehmen.

Eine mögliche Ausgestaltung eines im Block 210 bzw. im Steuergerät 200 ablaufenden Programms, stellt das Flussdiagramm in Figur 3 dar. Dabei wird das Programm zur Ansteuerung des Hochdruckschaltventils entweder in regelmäßigen Abständen oder aufgrund eines vorgebbaren Ereignisses gestartet, beispielsweise aufgrund einer Pumpenanforderung. Eine entsprechende Abfrage, ob ein Volumenstrom durch die Pumpe 26 erzeugt werden soll, ist nach dem Start des Programms in Schritt 300 vorgesehen. Wird keine Pumpenanforderung erkannt, bzw. ist keine Speicherkammerentleerung vorgesehen, so wird das Programm beendet und zu einem späteren Zeitpunkt erneut gestartet. Liegt jedoch eine Steueranforderung an die Pumpe vor, wird im nächsten Schritt 320 der Speicherkammerfüllgrad des Speichers 28 erfasst. Ist im Speicher genügend Reserve vorhanden, um das Volumen eines Bremsflüssigkeitsabbaus der Radbremsen 15 und 16 aufzunehmen, wird das Programm beendet. Wird jedoch wenigstens ein mittlerer Speicherkammerfüllgrad erkannt, d.h. ein Zustand, bei dem die Speicherkammer etwa zur Hälfte gefüllt ist, wird das Programm mit dem Schritt 340 weiter geführt. In diesem Schritt wird berücksichtigt, ob eine Raddruckabbauphase, eine Raddruckhaltephase oder eine Raddruckaufbauphase vorliegt. Bei einer Raddruckabbauphase muss der Speicher 28 entsprechende Aufnahmekapazität besitzen, weswegen die Bearbeitung des Programms weiter geführt wird, da mit Sicherheit eine Kammerentleerung durchgeführt werden wird. Auch bei einer Raddruckaufbauphase kann das Programm mit Schritt 360 weiter bearbeitet werden, da davon auszugehen ist, dass das aufgebaute Volumen in der Radbremse nach der Raddruckaufbauphase wieder abgebaut werden muss. In den übrigen Fällen wird das Programm beendet. Im Schritt 360 werden von dem Speicherkammergesamtvolumen, welches beispielsweise als Wert im Speicher 260 abgelegt ist, das tatsächlich im Speicher 28 vorliegende Volumen an Bremsflüssigkeit und das in den Radbremsen 15 bzw. 16 befmdliche Volumen an Bremsflüssigkeit abgezogen. Die so erzeugte Differenz stellt die Reserve im Speicher 28 dar, welche nach erfolgtem Druckabbau für einen weiteren Druckabbau ohne Entleerung des Speichers 28 durch die Pumpe 26 zur Verfügung steht. Unterschreitet diese Differenz einen parametrisierbaren prozentualen Schwellenwert des Speicherkammergesamtvolumens, wird erkannt, dass eine Speicherkammerentleerung vorgenommen werden sollte. Aus diesem Grund wird in Schritt 380 das Hochdruckschaltventil 36 geschlossen, um ein Ansaugen der Bremsflüssigkeit aus dem Hauptbremszylinder zu verhindern.

In einem alternativen Ausführungsbeispiel kann auch vorgesehen sein, das Hochdruckschaltventil generell zum Zwecke der Speicherkammerentleerung zu schließen, wenn in dem Programm ein hoher Speicherkammerfüllgrad erkannt wird.

## Patentansprüche

1. Verfahren zur Steuerung einer Bremsanlage in einem Fahrzeug, wobei vorgesehen ist, dass die Bremsanlage (10) wenigstens
- einen Hauptbremszylinder (12),
- eine Pumpe (26),
- eine Speicherkammer (28), und
- ein Hochdruckschaltventil (36) zwischen dem Hauptbremszylinder (12) und der Pumpe (26),
aufweist,
**dadurch gekennzeichnet, dass**
das Hochdruckschaltventil in Abhängigkeit vom Füllgrad der Speicherkammer geschlossen wird.

2. Verfahren nach Anspruch 1, **dadurch gekennzeichnet, dass**
das Hochdruckschaltventil
- in Abhängigkeit eines Vergleichs des Füllgrads mit einem ersten Schwellenwerte und/oder
- bei einer Ansteuerung der Pumpe
geschlossen wird.

3. Verfahren nach einem der vorhergehenden Ansprüche, **dadurch gekennzeichnet, dass** die Bremsanlage wenigstens eine hydraulisch oder pneumatisch gesteuerte Radbremse (15, 16) aufweist, wobei das Hochdruckschaltventil in Abhängigkeit von einem Aufbau und/oder einem Abbau des Drucks in der Radbremse angesteuert wird.

4. Verfahren nach einem der vorhergehenden Ansprüche, **dadurch gekennzeichnet, dass** eine Differenz aus
- dem Gesamtspeichervolumen und
- dem Füllgrad der Speicherkammer in Verbindung und
- dem im Bremskreis an wenigstens einer hydraulisch oder pneumatisch betriebenen Radbremse (15, 16) der Bremsanlage anliegenden Raddruckvolumen
ermittelt wird und das Hochdruckschaltventil geschlossen wird, wenn die Differenz einen Differenzschwellenwert unterschreitet.

5. Verfahren nach einem der vorhergehenden Ansprüche, **dadurch gekennzeichnet, dass** nach Schließung des Hochdruckschaltventils (36) die Speicherkammer (28), insbesondere ein wenigstens einer Radbremse (15, 16) zugeordneten Hydrospeicher (28), bis zur Erreichung eines vorgegebenen zweiten Schwellenwertes des Füllgrades geleert wird.

6. Vorrichtung zur Steuerung einer Bremsanlage in einem Fahrzeug, wobei vorgesehen ist, dass die Bremsanlage wenigstens
- ein Hauptbremszylinder (12),
- eine Pumpe (26),
- eine Speicherkammer (28),
- ein Hochdruckschaltventils (36) zwischen dem Hauptbremszylinder (12) und der Pumpe (26),
**dadurch gekennzeichnet, dass**
Mittel (210) vorgesehen sind, die das Hochdruckschaltventil in Abhängigkeit vom Füllgrad der Speicherkammer schließen.

7. Vorrichtung nach Anspruch 6, **dadurch gekennzeichnet, dass** das Mittel (210)
das Hochdruckschaltventils (36) bei Erreichen eines vorgegebenen ersten Schwellenwertes des Füllgrades der Speicherkammer und/oder bei einer Ansteuerung der Pumpe (26) schließt.

8. Vorrichtung nach einem der vorhergehenden Ansprüche, **dadurch gekennzeichnet, dass** die Bremsanlage (10) wenigstens eine hydraulisch oder pneumatisch gesteuerte Radbremse (15, 16) aufweist, wobei das Mittel (210) das Hochdruckschaltventil in Abhängigkeit von einem Aufbau und/oder einem Abbau des Drucks in der Radbremse ansteuert.

9. Vorrichtung nach einem der vorhergehenden Ansprüche, **dadurch gekennzeichnet, dass** das Mittel (210) eine Differenz aus
- dem Gesamtspeichervolumen und
- dem Füllgrad der Speicherkammer in Verbindung und
- dem im Bremskreis an wenigstens einer hydraulisch oder pneumatisch betriebenen Radbremse (15, 16) der Bremsanlage anliegenden Raddruckvolumen
ermittelt und das Hochdruckschaltventil schließt, wenn die Differenz einen Differenzschwellenwert unterschreitet.

10. Vorrichtung nach einem der vorhergehenden Ansprüche, **dadurch gekennzeichnet, dass** nach Schließung des Hochdruckschaltventils (36) die Speicherkammer (28), insbesondere ein wenigstens einer Radbremse (15, 16) zugeordneten Hydrospeicher (28), mittels der Pumpe bis zur Erreichung eines vorgegebenen zweiten Schwellenwertes des Füllgrades geleert wird.
